(19) Europäisches Patentamt

European Patent Office

Office européen des brevets

(11) Publication number: **0 328 002 B1**

## (12) EUROPEAN PATENT SPECIFICATION

(45) Date of publication of patent specification: **03.11.93**  (51) Int. Cl.⁵: **B62D 5/30**, B62D 7/14

(21) Application number: **89101947.3**

(22) Date of filing: **03.02.89**

---

(54) **Fail-safe steer angle control system for vehicle.**

---

(30) Priority: **06.02.88 JP 24945/88**

(43) Date of publication of application:
**16.08.89 Bulletin  89/33**

(45) Publication of the grant of the patent:
**03.11.93 Bulletin  93/44**

(84) Designated Contracting States:
**DE GB**

(56) References cited:
**GB-A- 2 186 244**

**PATENT ABSTRACTS OF JAPAN vol. 11, no. 269 (M-621)(2716) 02 September 1987, & JP-A-62 71760 (NISSAN MOTOR COMPANY LTD.) 02 April 1987,**

(73) Proprietor: **NISSAN MOTOR CO., LTD.
No.2, Takara-cho, Kanagawa-ku
Yokohama City(JP)**

(72) Inventor: **Sugasawa, Fukashi
No. 3-2-17-402, Isogo
Isogo-ku
Yokohama City(JP)**

(74) Representative: **TER MEER - MÜLLER - STEIN-
MEISTER & PARTNER
Mauerkircherstrasse 45
D-81679 München (DE)**

---

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 328 002 B1

## Description

The present invention relates to a fail-safe steer angle control system for a vehicle according to the preamble of claim 1.

In US-P-4 705 131 a fall-safe steer angle control system of the above kind is disclosed. This system comprises a fail-safe system which is arranged to detect an abnormal condition in a front wheel auxiliary steering system and a rear wheel steering system and makes the front wheel auxiliary steer angle or the rear wheel steer angle equal to zero by stopping the operation of only the abnormal side

This conventional fail-safe system, however, markedly changes the handling characteristic of the vehicle by reducing the controlled steer angle of the abnormal side to zero, so that it becomes difficult for the driver to control the vehicle.

The following, commonly assigned, U.S. Patent Applications relate to steer angle control systems similar to a steer angle control system of the present invention, but none shows a fail-safe system.

(1) Serial No. 195,085, filed on May 17, 1988.
(2) Serial No. 195,078, filed on May 17, 1988.
(3) Serial No. 245,148, filed on September 16, 1988.
(4) Serial No. 275,061, filed on November 22, 1988.
(5) Serial No. Unknown, filed on November, 30, 1988, and based on Japanese Application No. 62-299892 (Our ref. U181-88).
(6) Serial No. Unknown, filed on November 30, 1988, and based on Japanese Applications Nos. 62-299888 and 63-28858 (Our ref. U184-88).
(7) Serial No. Unknown, filed on November 10, 1988, and based on Japanese Applications Nos. 62-284103 and 62-284104 (Our ref. U186-88).
(8) Serial No. Unknown, based on Japanese Application No. 62-330281 (Our ref. U193-88).

It is an object of the present invention to provide a fail-safe steer angle control system which can perform a fail-safe operation without causing a steep change in vehicle steering characteristic.

This is achieved by a system as defined by claim 1.

Embodiments of the invention are described with reference to the drawings.

Fig. 1 is a schematic view of a vehicle equipped with a fail-safe steer angle control system according to one embodiment of the present invention.

Fig. 2 is a flowchart showing control operations performed by the control system of Fig. 1.

Fig. 3 is a block diagram schematically showing a fail-safe steer angle control system of the present invention.

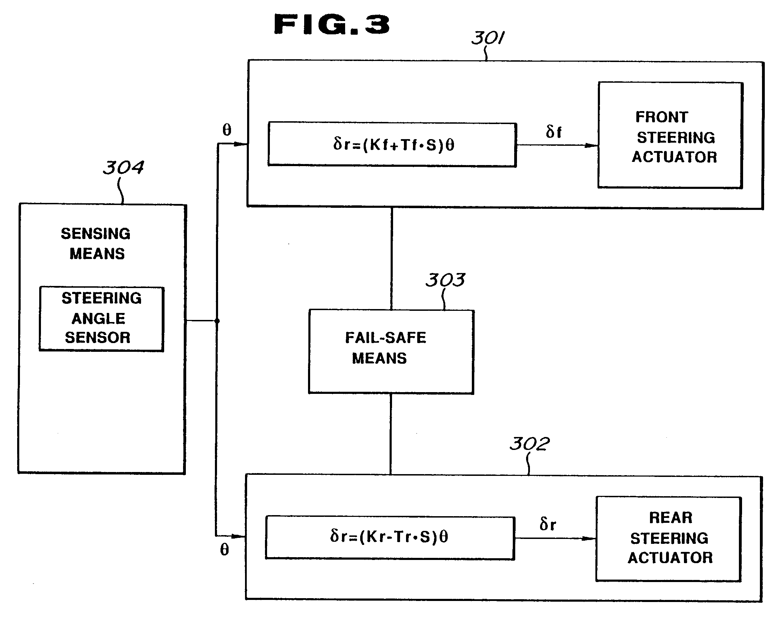

According to the present invention, a fail-safe steer angle control system for a vehicle, comprises front control means 301, rear control means 302 and fail-safe means 303, as schematically shown in Fig. 3.

The front control means 301 is means for controlling a front wheel steer angle of the vehicle by using a predetermined front control characteristic. The rear control means 302 is means for controlling a rear wheel steer angle of the vehicle by using a predetermined rear control characteristics. The fail-safe means 303 is connected with the front and rear control means. If a malfunction is detected in one of the front and rear control means 301 and 302, the fail-safe means 303 adjusts the control characteristic of the control means 301 or 302 in which no malfunction is detected. Preferably, the fail-safe means 303 is designed to adjust the front control characteristic of the front control means if a malfunction is detected in the rear control means, and to adjust the rear control characteristic of the rear control means if a malfunction is detected in the front control means.

The fail-safe steer angle control system may further comprises sensing means 304 for sensing a condition, such as a steering wheel angle, of the vehicle and producing an input signal.

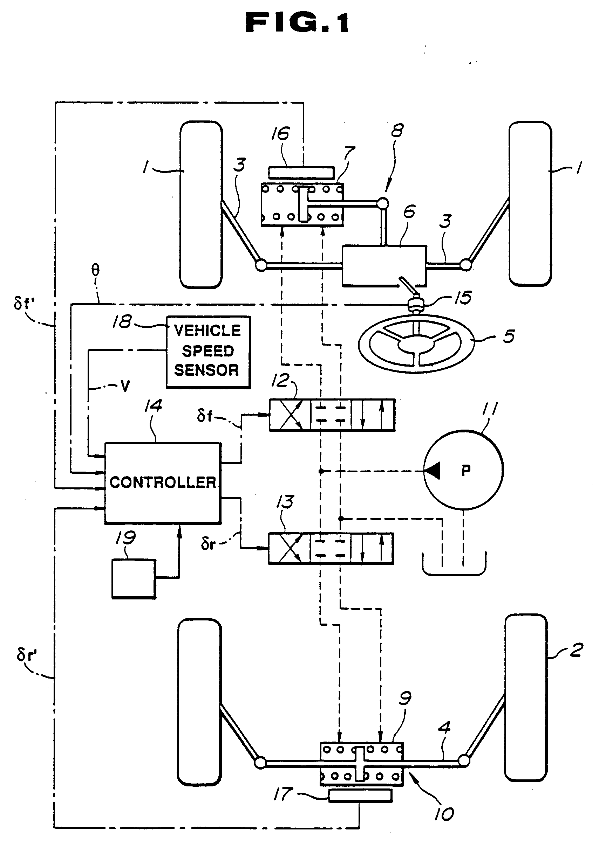

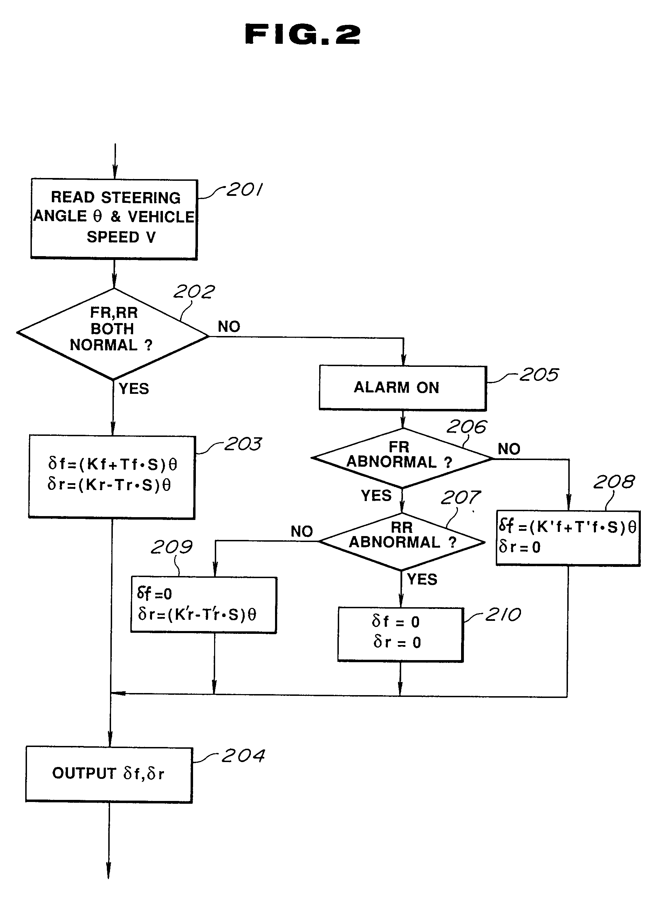

One embodiment of the present invention is shown in Figs. 1 and 2.

In a vehicle shown in Fig. 1, front wheels 1 are connected with a front steering linkage 3, and rear wheels 2 are connected with a rear steering linkage 4. Therefore, both the front and rear wheels 1 and 2 are steerable. A steering wheel 5 is connected with a steering gear 6. The steering gear 6 of this embodiment has a pinion connected with the steering wheel 5 and a rack provided in the front steering linkage between the left and right front wheels 1.

A front wheel auxiliary steering system 8 includes a front wheel auxiliary steering actuator 7 which varies a front wheel steer angle in cooperation with the steering gear 6.

A rear wheel steering system 10 includes a rear wheel steering actuator 9 for varying a rear wheel steer angle.

Front and rear electromagnetic type proportional control valves 12 and 13 are, respectively connected with the front and rear actuators 7 and 9. Each actuator 7 or 9 is operated by oil pressure supplied from an oil pump 11 through the front or rear control valve 12 or 13.

A controller 14 is connected with the front and rear control valves 12 and 13. The controller 14 delivers a front wheel steer angle control signal $\delta_f$ and a rear wheel steer angle control signal $\delta_r$, respectively to the front and rear control valves 12 and 13.

Steering angle sensor 15 and vehicle speed sensor 18 are connected with the controller 14. The steering angle sensor 15 is provided in a steering shaft, and senses a steering wheel angle. A steering wheel angle signal $\theta$ produced by the steering angle sensor 15, and a vehicle speed signal V of the vehicle speed sensor 18 are inputted into the controller 14. There are further provided a front wheel steer angle sensor 16 attached to the front actuator 7, and a rear wheel steer angle sensor 17 attached to the rear actuator 9. The front steer angle sensor 16 senses a displacement of a movable element of the actuator 7, and produces a front feedback steer angle signal $\delta_f'$, and the rear steer angle sensor 17 senses a displacement of a movable element of the rear actuator 9, and produces a rear feedback steer angle signal $\delta_r'$. A selector switch 19 is provided near the driver's seat. With the selector switch 19, the driver can select one of a sporty mode and a stable mode.

The controller 14 controls the front and rear wheel steer angles by performing a sequence of operations shown in Fig. 2.

At a first step 201, the controller 14 reads the steering angle $\theta$ and the vehicle speed V which are sensed by the sensors 15 and 18.

At a next step 202, the controller 14 determines whether each of the front wheel auxiliary steering system (FR) 8 and the rear wheel steering system (RR) 10 is properly functioning. For example, the controller 14 compares the front control signal with the front feedback signal, and produces a front error detection signal representing the existence of an abnormal condition in the front auxiliary steering system FR when a difference between the front control signal and the front feedback signal is greater than a predetermined level. When a difference between the rear control signal and the rear feedback signal is greater than a predetermined level, the controller 14 produces a rear error detection signal to indicate the presence of an abnormal condition in the rear steering system RR.

If the front auxiliary steering system FR and the rear steering system RR are both normal, the controller 14 proceeds from the step 202 to a step 203.

At the step 203, the controller 14 determines the front wheel auxiliary steer angle $\delta_f$ and the rear wheel steer angle $\delta_r$ in a normal mode. In this embodiment, the controller 14 calculates the front wheel auxiliary steer angle $\delta_f$ and the rear wheel steer angle $\delta_r$ in accordance with the following relationships.

$$\delta_f = (k_f + T_f \cdot S)\theta \qquad (1)$$

$$\delta_r = (k_r - T_r \cdot S)\theta \qquad (2)$$

In these equations, S is a Laplace operator, and $k_f$, $k_r$, $T_f$ and $T_r$ are parameters whose whose values are determined by the specifications of the vehicle and the vehicle speed.

At a step 204, the controller 14 delivers the front control signal representing the front wheel auxiliary steer angle $\delta_f$ to the front control valve 12, and the rear control signal representing the rear wheel steer angle $\delta_r$ to the rear control valve 13. As a result, the actual front wheel steer angle is controlled so that the actual front wheel steer angle is held equal to an algebraic sum of a basic front wheel steer angle determined by the steering gear 6 alone, and the front wheel auxiliary steer angle $\delta_f$ produced by the actuator 7.

If either or both of the front auxiliary steering system FR and the rear steering system RR is not normal, then the controller 14 proceeds from the step 202 to a step 205. At the step 205, the controller 14 turns on an alarm to indicate the occurrence of the abnormal condition.

After the step 205, the controller 14 determines, at a step 206, whether the front wheel auxiliary steering system FR is abnormal, and determines, at a step 207, whether the rear wheel steering system is abnormal.

If the front wheel auxiliary steering system FR is normal, and the rear wheel steering system RR is abnormal, then the controller 14 proceeds from the step 206 to a step 208. There, the controller 14 makes the rear wheel steer angle $\delta_r$ equal to zero, and determines the front wheel auxiliary steer angle $\delta_f$ in accordance with;

$$\delta_f = (k_f' + T_f' S)\theta$$

by using adjusted parameters $k_f'$ and $T_f'$. Then, the controller 14 outputs the thus-determined $\delta_f$ and $\delta_r$ at the step 204. In this case, therefore, this fail-safe steer angle control system stops the steering operation of the rear wheel steering system, and adjusts the control characteristic of the front wheel auxiliary steering system which is not abnormal.

If the rear wheel steering system RR is normal, but the front wheel auxiliary steering system FR is abnormal, then the controller 14 proceeds from the decision step 207 to a step 209. There, the controller 14 makes the front wheel auxiliary steer angle $\delta_f$ equal to zero, and determines the rear wheel steer angle $\delta_r$ in accordance with;

$$\delta_r = (k_r' - T_r' S)\theta$$

by using adjusted parameters $k_r'$ and $T_r'$. Then, the controller 14 outputs the front and rear control signals at the step 204 in accordance with the results of the step 209. Thus, the fail-safe system puts the front wheel auxiliary steering system FR out of operation, and adjusts the control characteristic of the rear wheel steering system RR.

If the front wheel auxiliary steering system FR and the rear wheel steering system RR are both abnormal, then the controller 14 proceeds from the decision step 207 to a step 210, and reduces both of the front wheel auxiliary steer angle $\delta_f$ and the rear wheel steer angle $\delta_r$ to zero. Therefore, the vehicle is steered only through the steering gear 6 of the front wheels 1.

In the above-mentioned control functions (1) and (2), the parameters have the following meanings.

$k_f$: Improvement in vehicle stability.

$T_f$, $T_r$: Improvement in vehicle response (transient state characteristic). (However, an unnatural feeling is brought about when the difference between $T_F$ and $T_r$ is too much.)

$k_r$: Control of a steady state gain.

Therefore, the fail-safe system of this embodiment is arranged to improve the response and the stability of the vehicle by adjusting the steering system on the normal side when the parameters $k_f$, $T_f$ or $k_r$, $T_r$ are equal to zero as the result of the detection of an abnormal condition in either the front auxiliary system or the rear steering system.

When the front wheel auxiliary steering system becomes abnormal, and $k_f$ is set equal to zero, then this fail-safe system can prevent an undesired decrease of the yaw rate gain of the vehicle by decreasing the parameter $k_r$. When the front wheel auxiliary steering system becomes abnormal and $T_f$ is set equal to zero, the fail-safe system can ensure the vehicle response characteristic by increasing the parameter $T_r$.

When the rear wheel steering system becomes abnormal and $k_r$ is set equal to zero, then this fail-safe system can prevent the vehicle stability from degrading, by decreasing the parameter $k_f$. When the rear steering system becomes abnormal and $T_r$ is set equal to zero, this fail-safe system can ensure the steering response by increasing the parameter $T_f$.

At the step 208 of this embodiment, $k_f$ and $T_f$ are both adjusted to $k_f'$ and $T_f'$. However, it is optional to adjust only either of $k_f$ and $T_f$. Similarly, it is optional to adjust only either of $k_r$ and $T_r$ at the step 209.

## Claims

1. A fail-safe steer angle control system for a vehicle, comprising a front control means (8,12,14; 301) for controlling a front wheel steer angle of the vehicle according to a predetermined front control characteristic, a rear control means (10,13,14; 302) for controlling a rear wheel steer angle of the vehicle according to a predetermined rear control characteristic, and a fail-safe means (14; 303) connected with said front and rear control means and adapted to detect a malfunction in said front and rear control means, **characterized** in that said fail-safe means (14; 303) is further adapted to adjust the front control characteristic when a malfunction is detected in the rear control means (10,13,14; 302) so as to compensate for a change in the steering characteristics of the vehicle caused by said malfunction of the rear control means (10,13,14; 302), and to adjust the rear control characteristic when a malfunction is detected in the front control means (8,12,14; 301) so as to compensate for a change in the steering characteristic of the vehicle caused by said malfunction of the front control means (8,12,14; 301).

2. A fail-safe steer angle control system according to claim 1, **characterized** in that said fail-safe means (303) is adapted to adjust the front control characteristic only when a malfunction is detected in the rear control means (10, 13,14; 302) and at the same time the front control means (8,12,14; 301) remains normal, and to adjust the rear control characteristic only when a malfunction is detected in the front controls means (8,12,14; 301) and at the same time the rear control means (10,13,14; 302) remains normal.

3. A fail-safe steer angle control system according to claim 1 or 2, **characterized** in that a steering angle sensor (15,304) for sensing a steering wheel angle and producing a signal ($\theta$) indicative thereof is connected with said front and rear control means (14; 301,302), that said front control characteristic is a first transfer function, said front control means (14,301) being adapted to produce a front control signal ($\delta_f$) representing a desired auxiliary front wheel steer angle in accordance with said steering wheel angle signal ($\theta$), and that said rear control characteristic is a second transfer function, said rear control means (14,302) being adapted to produce a rear control signal ($\delta_r$) representing a desired rear wheel steer angle in accordance with said steering wheel angle signal ($\theta$).

4. A fail-safe steer angle control system according to claim 3, **characterized** in that said fail-safe means (14,303) is adapted to reduce said front control signal ($\delta_f$) to zero and to adjust a parameter ($k_r$,$T_r$) appearing in the second transfer function so as to compensate for said reduction of the front control signal ($\delta_f$) to zero,

when the front control means (14,301) is abnormal and the rear control means (14,302) is normal, and that the fail-safe means (14,303) is adapted to reduce the rear control signal ($\delta_r$) to zero and to adjust a parameter ($k_f,T_f$) appearing in the first control function so as to compensate for said reduction of the rear control signal ($\delta_r$) to zero, when the rear control means (14,302) is abnormal and the front control means (14,301) is normal.

5. A fail-safe steer angle control system according to claim 4, **characterized** in that said first and second transfer functions are, respectively, expressed as

$$\delta_f = (k_f + T_f S)\, \theta$$
$$\delta_r = (k_r - T_r S)\, \theta$$

where $\delta_f$ is the desired auxiliary front wheel control angle which is added to a main front wheel steer angle determined by a steering wheel (5), $\delta_r$ is the desired rear wheel steer angle, $\theta$ is the steering wheel angle, $k_f$ is a first front parameter, $T_f$ is a second front parameter, $k_r$ is a first rear parameter, $T_r$ is a second rear parameter, and S is an operator used in Laplace transformation.

6. A fail-safe steer angle control system according to claim 5, **characterized** in that the fail-safe means (14,303) is adapted to decrease the first front parameter ($k_f$) to a non-zero smaller value ($k'_f$) when the front control means (14,301) is normal and the rear control means (14,302) is abnormal and to decrease the first rear parameter ($k_r$) to a non-zero smaller value ($k'_r$) when the rear control means (14,302) is normal and the front control means (14,301) is abnormal.

7. A fail-safe steer angle control system according to claim 5 or 6, **characterized** in that the fail-safe means (14,303) is adapted to increase the second front parameter ($T_f$) when the front control means (14,301) is normal and the rear control means (14,302) is abnormal and to increase the second rear parameter ($T_r$) when the rear control means (14,302) is normal and the front control means (14,301) is abnormal,

8. A fail-safe steer angle control system according to one of the preceding claims, **characterized** in that said front control means (8,12,14; 301) comprises a front steering actuator (7) for controlling said front wheel steer angle, that said rear control means (10,13,14; 302) comprises a rear steering actuator (9) for controlling said rear wheel steer angle, that a front wheel steer angle sensor (16) for sensing a displacement of said front wheel steering actuator (7) and producing a front feedback steer angle signal ($\delta'_f$) indicative of said displacement and a rear wheel steer angle sensor (17) for sensing a displacement of said rear wheel steering actuator (9) and producing a rear feedback steer angle signal ($\delta'_r$) are connected to said fail-safe means (14), and that said fail-safe means (14) comprises an error detecting means for detecting malfunctions in the front and rear control means by comparing said front and rear control signals ($\delta_f,\delta_r$) with said front and rear feedback steer angle signals ($\delta'_f,\delta'_r$), respectively.

**Patentansprüche**

1. Ausfallgeschütztes Lenkwinkel-Steuerungssystem für ein Fahrzeug, mit einer vorderen Steuereinrichtung (8,12,14;301) zur Steuerung des Lenkwinkels der Vorderräder des Fahrzeugs entsprechend einer vorgegebenen vorderen Steuerungs-Charakteristik, einer hinteren Steuerungseinrichtung (10,13,14;302) zur Steuerung des Lenkwinkels der Hinterräder des Fahrzeugs entsprechend einer vorgegebenen hinteren Steuerungs-Charakteristik, und einer Ausfallschutzeinrichtung (14,303) in Verbindung mit der vorderen und hinteren Steuerungseinrichtung, die dazu dient, Fehlfunktionen der vorderen und hinteren Steuerungseinrichtungen festzustellen, dadurch **gekennzeichnet**, daß die Ausfallschutzeinrichtung (14,303) weiterhin darauf eingerichtet ist, die vordere Steuerungs-Charakteristik anzupassen, wenn eine Funktionsstörung der hinteren Steuerungseinrichtung (10,13,14;302) ermittelt wird, und auf diese Weise eine Änderung der Lenk-Charakteristik des Fahrzeugs aufgrund der Funktionsstörung der hinteren Steuerungseinrichtung (10,13,14;302) zu kompensieren, und die hintere Steuerungs-Charakteristik anzupassen, wenn eine Funktionsstörung der vorderen Steuerungseinrichtung (8,12,14;301) ermittelt wird und so eine Änderung der Steuerungs-Charakteristik des Fahrzeugs aufgrund der Funktionsstörung der vorderen Steuerungseinrichtung (8,12,14;301) zu kompensieren.

2. Ausfallgeschütztes Lenkwinkel-Steuerungssystem nach Anspruch 1, dadurch **gekennzeichnet,** daß die Ausfallschutzeinrichtung (303) darauf eingerichtet ist, die vordere Steuerungs-Charakteristik nur dann anzupassen, wenn eine Fehlfunktion der hinteren Steuerungseinrichtung (10,13,14;302) ermittelt wird und zugleich die vordere Steuerungseinrichtung (8,12,14;301) normal arbeitet, und die hintere Steuerungs-Charakteristik nur dann anzupassen, wenn eine Funktionsstörung der vorderen Steuerungseinrichtung (8,12,14;301) ermittelt wird und zugleich die hintere Steuerungseinrichtung normal arbeitet.

3. Ausfallgeschütztes Lenkwinkel-Steuerungssystem nach Anspruch 1 oder 2, dadurch **gekennzeichnet,** daß ein Lenkwinkelsensor (15,304) zur Ermittlung des Lenkwinkels und Erzeugung eines Signals ($\theta$) entsprechend dem Lenkwinkel mit der vorderen und hinteren Steuerungseinrichtung (14,301,302) verbunden ist, daß die vordere Steuerungs-Charakteristik eine erste Übertragungsfunktion ist, daß die vordere Steuerungseinrichtung (14,301) eingerichtet ist zur Erzeugung eines vorderen Steuerungssignal ($\delta_f$) entsprechend einem gewünschten vorderen Hilfs-Lenkwinkel gemäß dem Lenkwinkelsignal ($\theta$), und daß die hintere Steuerungs-Charakteristik eine zweite Übertragungsfunktion ist, welche hintere Steuerungseinrichtung (14,302) darauf eingerichtet ist, ein hinteres Steuerungssignal ($\delta_r$) entsprechend einem gewünschten hinteren Lenkwinkel gemäß dem Lenkwinkelsignal ($\theta$) zu erzeugen.

4. Ausfallgeschütztes Lenkwinkel-Steuerungssystem nach Anspruch 3, dadurch **gekennzeichnet,** daß die Ausfallschutzeinrichtung (14,303) darauf eingerichtet ist, das vordere Steuersignal ($\delta_f$) auf Null zu reduzieren und Parameter ($k_r,T_r$) einzustellen, die in der zweiten Übertragungsfunktion auftreten, und dann die Reduktion des vorderen Steuersignals ($\delta_f$) auf Null zu reduzieren, wenn die vordere Steuerungseinrichtung (14,301) nicht normal arbeitet und die hintere Steuerungseinrichtung (14,302) normal arbeitet, und daß die Ausfallschutzeinrichtung (14,303) ferner darauf eingerichtet ist, das hintere Steuerungssignal ($\delta_r$) auf Null zu reduzieren, und die Parameter ($k_f,T_f$) einzustellen, die in der ersten Steuerfunktion auftreten und damit die Verringerung des hinteren Steuersignals ($\delta_r$) auf Null zu kompensieren, wenn die hintere Steuerungseinrichtung (14,302) nicht normal arbeitet und die vordere Steuerungseinrichtung (14,301) normal arbeitet.

5. Ausfallgeschütztes Lenkwinkel-Steuerungssystem nach Anspruch 4, dadurch **gekennzeichnet,** daß die erste und zweite Übertragungsfunktion ausgedrückt wird als

$$\delta_f = (k_f + T_f S) \theta$$

$$\delta_r = (k_r - T_r S) \theta$$

wobei $\delta_f$ der gewünschte vordere Hilfslenkwinkel ist, der zu dem vorderen Hauptlenkwinkel addiert wird, der durch ein Lenkrad (5) bestimmt wird, $\delta_r$ der gewünschte hintere Lenkwinkel, $\theta$ der Lenkradwinkel, $k_f$ ein erster, vorderer Parameter, $T_f$ ein zweiter, vorderer Parameter, $k_r$ ein erster, hinterer Parameter, $T_r$ ein zweiter, hinterer Parameter und S ein Operator für eine Laplace-Transformation ist.

6. Ausfallgeschütztes Lenkwinkel-Steuerungssystem nach Anspruch 5, dadurch **gekennzeichnet,** daß die Ausfallschutzeinrichtung (14,303) darauf eingerichtet ist, den ersten, vorderen Parameter $k_f$ auf einen von Null abweichenden, kleineren Wert ($k'_f$) zu reduzieren, wenn die vordere Steuerungseinrichtung (14,301) normal arbeitet und die hintere Steuerungseinrichtung (124.302) gestört ist, und den ersten, hinteren Parameter ($k_r$) auf einen von Null abweichenden, kleineren Wert ($k'_r$) zu reduzieren, wenn die hintere Steuerungseinrichtung (14,302) normal arbeitet und die vordere Steuerungseinrichtung (14,301) gestört ist.

7. Ausfallgeschütztes Lenkwinkel-Steuerungssystem nach Anspruch 5 oder 6, dadurch **gekennzeichnet,** daß die Ausfallschutzeinrichtung (14,303) darauf eingerichtet ist, den zweiten, vorderen Parameter ($T_f$) zu vergrößern, wenn die vordere Steuerungseinrichtung (14,301) normal arbeitet und die hintere Steuerungseinrichtung (14,302) gestört ist, und den zweiten, hinteren Parameter ($T_r$) zu vergrößern, wenn die hintere Steuerungseinrichtung (14,302) normal arbeitet und die vordere Steuerungseinrichtung (14,301) gestört ist.

8. Ausfallgeschütztes Lenkwinkel-Steuerungssystem nach einem der vorhergehenden Ansprüche, dadurch **gekennzeichnet,** daß die vordere Steuerungseinrichtung (8,12,14;301) ein Frontlenkungs-Betätigungsorgan (7) zur Steuerung des vorderen Lenkwinkels umfaßt, daß die hintere Steuerungseinrichtung (10,13,14;302) ein hinteres Lenkungs-Betätigungsorgan (9) zur Steuerung des hinteren Lenkwinkels umfaßt, daß ein vorderer Lenkwinkelsensor (16) zur Abtastung der Verschiebung des vorderen Lenkungs-Betätigungsorgans (7) und Erzeugung eines vorderen Rückkoppelungs-Lenkwinkelsignals ($d'_f$) entsprechend der Verschiebung vorgesehen ist, daß ein hinterer Lenkwinkelsensor (17) zur Ermittlung der Verschiebung des hinteren Lenkungs-Betätigungsorgans (9) und Erzeugung eines hinteren

Rückkoppellungs-Lenkwinkelsignals ($\delta'_r$) vorgesehen ist, daß die Sensoren mit der Ausfallschutzeinrichtung (14) verbunden sind, und daß die Ausfallschutzeinrichtung (14) einen Fehlerdetektor umfaßt, der Fehlfunktionen der vorderen und hinteren Steuereinrichtungen durch Vergleich der vorderen und hinteren Steuersignale ($\delta_f,\delta_r$) mit den vorderen und hinteren Rückkoppelungs-Steuersignalen ($\delta'_r,\delta'_r$) umfaßt.

## Revendications

1. Système de contrôle de l'angle de braquage avec dispositif de sécurité pour véhicule, comprenant un moyen de contrôle avant (8,12,14;301) pour contrôler un angle de braquage de roue avant du véhicule en accord avec une caractéristique de contrôle avant prédéterminée, un moyen de contrôle arrière (10,13,14;302) pour contrôler un angle de braquage de roue arrière du véhicule en accord avec une caractéristique de contrôle arrière prédéterminée, et un moyen de sécurité (14;303) connecté auxdits moyens de contrôle avant et arrière et apte à détecter une défaillance dans lesdits moyens de commande avant et arrière, **caractérisé** en ce que ledit moyen de sécurité (14;303) est apte, en outre, à régler la caractéristique de contrôle avant lorsqu'une défaillance est détectée dans le moyen de contrôle arrière (10,13,14;302) de façon à compenser un changement dans les caractéristiques de braquage du véhicule provoqué par ladite défaillance du moyen de contrôle arrière (10,13,14;302) et à régler la caractéristique de contrôle arrière lorsqu'une défaillance est détectée dans le moyen de contrôle avant (8,12,14;301) de façon à compenser un changement dans la caractéristique de braquage du véhicule provoqué par ladite défaillance du moyen de contrôle avant (8,12,14;301).

2. Système de contrôle de l'angle de braquage avec dispositif de sécurité selon la revendication 1, **caractérisé** en ce que ledit moyen de sécurité (303) est conçu pour régler la caractéristique de contrôle avant seulement lorsqu'une défaillance est détectée dans le moyen de contrôle arrière (10,13,14;302) et en même temps, le moyen de contrôle avant (8;12,14;301) reste normal, et pour régler la caractéristique de contrôle arrière seulement lorsqu'une défaillance est détectée dans le moyen de contrôle avant (8,12,14;301) et en même temps, le moyen de contrôle arrière (10,13,14;302) reste normal.

3. Système de contrôle de l'angle de braquage avec dispositif de sécurité selon la revendication 1 ou 2, **caractérisé** en ce qu'un capteur d'angle de braquage (15,304) destiné à capter un angle de volant de direction et à produire un signal ($\theta$) indiquant celui-ci est connecté auxdits moyens de contrôle avant et arrière (14;301,302), que ladite caractéristique de contrôle avant est une première fonction de transfert, ledit moyen de contrôle avant (14,301) étant apte à produire un signal de contrôle avant ($\delta_f$) représentant un angle de braquage de roue avant auxiliaire souhaité en accord avec ledit signal d'angle de volant de direction ($\theta$), et en ce que ladite caractéristique de contrôle arrière constitue une deuxième fonction de transfert, ledit moyen de contrôle arrière (14,302) étant apte à produire un signal de contrôle arrière ($\delta_r$) représentant un angle de braquage de roue arrière souhaité en accord avec ledit signal d'angle de volant de direction ($\theta$).

4. Système de contrôle de l'angle de braquage avec dispositif de sécurité selon la revendication 3, **caractérisé** en ce que ledit moyen de sécurité (14,303) est apte à réduire ledit signal de contrôle avant ($\delta_f$) à zéro et à régler un paramètre ($k_r$, $T_r$) apparaissant dans la deuxième fonction de transfert, de façon à compenser ladite réduction du signal de contrôle avant ($\delta_f$ ) à zéro, lorsque le moyen de contrôle avant (14,301) n'est pas normal et que le moyen de contrôle arrière (14,302) est normal, et que le moyen de sécurité (14,303) est conçu pour réduire le signal de contrôle arrière ($\delta_r$) à zéro et pour régler un paramètre ($k_f$, $T_f$) apparaissant dans la première fonction de contrôle de façon à compenser ladite réduction du signal de contrôle arrière ($\delta_r$) à zéro lorsque le moyen de contrôle arrière (14,302) n'est pas normal et que le moyen de contrôle avant (14,301) est normal.

5. Système de contrôle de l'angle de braquage avec dispositif de sécurité selon la revendication 4, **caratérisé** en ce que lesdites première et deuxième fonctions de transfert sont, respectivement, exprimées par

$$\delta_f = (k_f + T_f S)\,\theta$$
$$\delta_r = (k_r - T_r S)\,\theta$$

dans lesquelles $\delta_f$ représente l'angle de contrôle de roue avant auxiliaire souhaité qui est ajouté à l'angle de braquage de roue avant principal déterminé par un volant de direction (5), $\delta_r$ représente l'angle de braquage de roue

arrière souhaité, $\theta$ représente l'angle de volant de direction, $k_f$ est un premier paramètre avant, $T_f$ est un deuxième paramètre avant, $k_r$ est un premier paramètre arrière, $T_r$ est un deuxième paramètre arrière et S est un opérateur utilisé dans la transformation Laplace.

6. Système de contrôle de l'angle de braquage avec dispositif de sécurité selon la revendication 5, **caractérisé** en ce que le moyen de sécurité (14,303) est conçu pour diminuer le premier paramètre avant ($k_f$) à une valeur plus petite non-zéro ($k'_f$) lorsque le moyen de contrôle avant (14,301) est normal et que le moyen de contrôle arrière (14,302) n'est pas normal et pour diminuer le premier paramètre arrière ($k_r$) à une valeur plus petite non-zéro ($k'_r$) lorsque le moyen de contrôle (14,302) est normal et que le moyen de contrôle avant (14,301) n'est pas normal.

7. Système de contrôle de l'angle de braquage avec dispositif de sécurité selon la revendication 5 ou 6, **caractérisé** en ce que le moyen de sécurité (14,303) est conçu pour augmenter le deuxième paramètre avant ($T_f$) lorsque le moyen de contrôle avant (14,301) est normal et que le moyen de contrôle arrière (14,302) n'est pas normal et pour augmenter le deuxième paramètre arrière ($T_r$) lorsque le moyen de contrôle arrière (14,302) est normal et que le moyen de contrôle avant (14,301) n'est pas normal.

8. Système de contrôle de l'angle de braquage avec dispositif de sécurité selon l'une des revendications précédentes, **caractérisé** en ce que ledit moyen de contrôle avant (8,12,14;301) comprend un actionneur de braquage avant (7) pour commander ledit angle de braquage de roue avant, que ledit moyen de contrôle arrière (10,13,14;302) comprend un actionneur de braquage arrière (9) pour commander ledit angle de braquage de roue arrière, qu'un capteur d'angle de braquage de roue avant (16) pour capter un déplacement dudit actionneur de braquage de roue avant (7) et pour produire un signal d'angle de braquage de rétroaction avant ($\delta'_f$) indiquant ledit déplacement et un capteur d'angle de braquage de roue arrière (17) pour capter un déplacement dudit actionneur de braquage de roue arrière (9) et pour produire un signal d'angle de braquage de rétroaction arrière ($\delta'_r$) sont connectés audit moyen de sécurité (14), et en ce que ledit moyen de sécurité (14) comprend un moyen détectant les erreurs pour détecter des défaillances dans les moyens de contrôle avant et arrière en comparant lesdits signaux de contrôle avant et arrière ($\delta_f,\delta_r$) avec lesdits signaux d'angle de braquage de rétroaction avant et arrière ($\delta'_f,\delta'_r$), respectivement.

# FIG.1

# FIG.2

READ STEERING ANGLE θ & VEHICLE SPEED V — 201

FR,RR BOTH NORMAL ? — 202

NO

YES

ALARM ON — 205

$\delta f=(Kf+Tf\cdot S)\theta$
$\delta r=(Kr-Tr\cdot S)\theta$ — 203

FR ABNORMAL ? — 206

NO

YES

$\delta f=(K'f+T'f\cdot S)\theta$
$\delta r=0$ — 208

RR ABNORMAL ? — 207

NO

YES

$\delta f=0$
$\delta r=(K'r-T'r\cdot S)\theta$ — 209

$\delta f=0$
$\delta r=0$ — 210

OUTPUT $\delta f,\delta r$ — 204

# FIG.3

**301**

$\theta$

$\delta r = (Kf + Tf \cdot S)\theta$

$\delta f$

FRONT
STEERING
ACTUATOR

**304**

SENSING
MEANS

STEERING
ANGLE
SENSOR

**303**

FAIL-SAFE
MEANS

**302**

$\delta r = (Kr - Tr \cdot S)\theta$

$\delta r$

REAR
STEERING
ACTUATOR

$\theta$